Europäisches Patentamt

European Patent Office

Office européen des brevets

(11) Publication number: **0 453 585 B1**

## EUROPEAN PATENT SPECIFICATION

(45) Date of publication of patent specification: **19.10.94**

(51) Int. Cl.⁵: **A23F 5/02**

(21) Application number: **90107600.0**

(22) Date of filing: **21.04.90**

(54) **Method for producing coffee.**

(43) Date of publication of application:
**30.10.91 Bulletin 91/44**

(45) Publication of the grant of the patent:
**19.10.94 Bulletin 94/42**

(84) Designated Contracting States:
**CH DE FR LI**

(56) References cited:
**DE-C- 464 107**

**R.J. CLARKE: "Coffee", vol. 2: Technology",
1987, pages 49-52, Elsevier Applied Science,
London, GB**

(73) Proprietor: **POKKA CORPORATION
35-16, Daikancho
Higashi-ku
Nagoya-shi Aichi-ken (JP)**

(72) Inventor: **Tamaki, Yohji
8-71, Unumadai
Kagamihara-shi
Gifu-ken (JP)**
Inventor: **Sakaida, Kazuhiro
7-1-202, Nakamachi 2-chome
Ichinomiya-shi
Aichi-ken (JP)**

(74) Representative: **Thomsen, Dieter, Dr.
Patentanwalt
Postfach 70 19 29
D-81319 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to a method for producing coffee having excellent taste and flavor.

The consumption of coffee has been steadily increasing year by year, and the taste of consumers for coffee is becoming increasingly diversified and refined. With these changes, techniques for blending and roasting raw beans and for storing roasted beans have also been improved. However, no consideration has so far been given on the storage and ripening of raw coffee beans, and hence raw beans are preserved under insufficient temperature and packaging management.

The publication by R.J. Clarke et al. "Coffee" vol. 2: Technology, 1987, pages 49 to 52 (Elsevier Applied Science, London GB and New York USA) reports about a series of technical ideas and considerations in conjunction with coffee and around the starting raw beans and different green coffee types, e.g. Kenya, Brazils, Arabica etc., i.e. storage, drying, use of bags, isotherm mode, stability, cleaning etc.

A selection of technical parameters to improve raw coffee is given in DE 464 107-C where the raw coffee is cooled down to a temperature below 0°C and particularly during more than 24 hours or 48 hours or more down to a temperature of -8°C to -10°C.

Thus it is the object of the present invention to provide a method for making coffee extract with highest quality taste and flavor.

According to the invention this object is solved by the process of claim 1, i.e. a process for making coffee extract from raw coffee beans available in the market place by the steps of (1) roasting said beans; (2) grinding the roasted beans; and (3) exposing the ground beans to hot water to form a coffee extract solution, which consists of pretreating said raw coffee beans before said roasting step to thereby improve the flavor properties of said coffee extract wherein said pretreatment consists essentially of

(a) placing the raw coffee beans in a freezer maintained at temperature in a range from -4°C to no more than 3°C wherein the beans remain in an unfrozen condition while in said freezer;

(b) keeping said beans in said freezer in said temperataure range for at least 7 days and for not more than 21 days;

(c) removing said beans from said freezer; and

(d) starting the roasting of the beans within 24 hours after the removal from said freezer.

Preferably the temperature at step (a) is in a range from -4°C to 0°C, i.e. in the "HYO-ON" range. Generally tie "HYO-ON" range means a temperature range from the freezing point of a substance to 0°C.

In a particular embodiment the beans are charged into a bag before they are placed in the freezer.

It can be preferable to store the raw coffee beans in a gas-permeable bag like a polyethylene bag or a jute bag. Also an aluminum bag can be used.

Coffee extract obtained from coffee beans roasted in accordance with the method of the invention is excellent in flavor and taste.

In practicing the present invention, raw coffee beans are stored for 7 to 21 days under unfrozen conditions at a temperature in the range from -4°C (freezing point of the raw beans) to 3°C, preferably in the "HYO-ON" range.

Raw coffee beans are little fruits of coffee trees and are prepared by removing skin and sarcocarp from the fruits and then drying the fruits. The present invention can be applied to any raw coffee beans available on the market.

When beans are stored at a temperature lower than their freezing point or at a temperature higher than 3°C, there can be attained no substantial improvements in the taste and flavor of resultant coffee extract. Freezing point of raw coffee beans varies depending on the moisture content in the beans, amount of of water-soluble components contained therein, and the like.

Raw coffee beans are stored for a period of from 7 to 21 days, preferably from 12 to 17 days. When beans are stored for a period shorter than 7 days, the taste and flavor of coffee extract prepared therefrom will be improved only insufficiently, whereas when beans are stored for a period longer than 21 days, there will be attained no substantial improvements in the taste and flavor of coffee extract prepared therefrom.

Raw coffee beans stored under conditions mentioned above are then roasted preferably within 24 hours after the storage. The roasting can be effected by any of the conventional methods, using, e.g., a roaster.

In accordance with the method of the present invention, high quality roasted coffee beans can be obtained by a simple treatment, and coffee extract having excellent taste and flavor can be prepared therefrom.

Example 1

Into a polyethylene resin bag was charged 500 g of raw coffee beans (Columbia), and the bag was stored for 14 days in a freezer (manufactured by Nippon Light Metal Co., Ltd.) maintained at a temperature of from -1.5 to -0.5 °C. Thereafter, the beans were roasted by a coffee roaster, ground and then extracted with hot water to give 6 liters of coffee extract. For comparison, raw coffee beans stored at room temperature were roasted, ground and extracted with hot water in the same manner as above to give a control sample. The taste and flavor of these coffee extracts were examined by a panel of 50 members. Their taste and flavor, when judged to be excellent, were rated as 3; when judged good, 2; and when judged poor, 1. The sum total of the points so rated are shown in Table 1.

Table 1

|  | Taste | Flavor |
|---|---|---|
| Control | 77 | 66 |
| Present Invention | 123 | 134 |

Example 2

Into a polyethylene resin bag was charged 300 g of raw coffee beans (Jamaica), and the bag was stored for 12 to 17 days in a freezer maintained at a temperature of -1.5 to -0.5 °C. Thereafter, the beans were roasted, ground and extracted to give coffee extract. To this extract (835 g) were added 100 g of milk and 65 g of sugar to make the total weight 1,000 g, and the mixture was then canned. For comparison, a sample of canned coffee was prepared in the same manner as above, using raw coffee beans stored at room temperature. The taste and flavor of these canned coffees were examined by a panel of 30 members. Their taste and flavor, when judged to be excellent, were rated as 3; when judged good, 2; and when judged poor, 1. The sum total of points so rated are shown in Table 2.

Table 2

|  | Points |
|---|---|
| Control | 50 |
| Present Invention | 80 |

Example 3

Three hundred grams (300 g) each of coffee beans were charged into a polyethylene resin bag, a jute bag and an aluminum bag, and these packaged raw coffee beans and non-packed raw coffee beans (300 g) were stored in a freezer at a temperature of -1.5 to -0.5 °C for 14 days. Thereafter, the beans were roasted, ground and extracted with hot water to give 3.6 liters each of coffee extracts. For comparison, raw coffee beans stored at room temperature were roasted, ground and extracted in the same manner as above to give a control sample. These coffee extracts were rated by a panel of 20 members in the same manner as in Example 2. Results obtained are shown in Table 3. It would be understood from the results that polyethylene resin and jute bags are preferable as a package for containing raw coffee beans.

EP 0 453 585 B1

Table 3

|  | Points |
|---|---|
| Control | 33 |
| Polyethylene resin bag | 53 |
| Jute bag | 50 |
| Aluminum bag | 40 |
| Not packed | 37 |

Example 4

Into polyethylene resin bags was charged 300 g each of raw coffee beans (robusta), and the bags were stored in a freezer at a temperature of -1.5 to -0.5 °C for a period of 9 days, 14 days, 16 days or 20 days. Thereafter, the beans were roasted, ground and extracted under the same conditions to give coffee extracts. For comparison, a control sample of coffee extract was prepared in the same manner as above, using raw coffee beans stored at room temperature. These coffee extracts were evaluated by a panel of 20 members in accordance with the same rating as in Example 2. The contents of chlorogenic acid and caffeine contained in the roasted coffee beans were determined by liquid chromatography. Results obtained are shown in Table 4.

4

EP 0 453 585 B1

Table 4

| | Rated Points of | Contents (%) | |
| | Coffee Extract | Chlorogenic Acid | Caffeine |
| --- | --- | --- | --- |
| Control | 30 | 3.79 | 8.52 |
| Stored for 9 days | 40 | 5.26 | 8.57 |
| Stored for 14 days | 52 | 5.43 | 8.39 |
| Stored for 16 days | 50 | 5.65 | 8.55 |
| Stored for 20 days | 43 | 4.75 | 8.65 |

It would be understood from the results that the taste and flavor of coffee extract can be markedly improved when raw coffee beans are stored before roasting at -1.5 to -0.5 °C for a period of from 14 to 16 days. It would also been understood that roasted beans stored for 14 to 16 days contain increased quantities of chlorogenic acid. In general, chlorogenic acid is regarded to be an ingredient useful as an indicator for the degree of roasting of coffee beans. It is, however, highly probable that the above difference in the taste and flavor of coffee extract is based on the difference in the content of chlorogenic acid because there is little difference in the content of caffeine, an important ingredient which decides the taste of coffee extract. In Food Chemistry, 15, 219-227 (1984) is reported that robusta beans contain chlorogenic acid in quantities higher than in arabica beans, which are generally regarded to be inferior in quality to robusta. This report seems to support the presumption that the improvement in the quality of coffee beans according to the present invention is associated with chlorogenic acid.

Example 5

Into polyethylene resin bags was charged 300 g each of raw coffee beans (Colombia), and the bags were stored for 14 days in a refrigerator (4 to 6 °C), a freezer (-1.5 to 0.5 °C) or a deep freezer (-22 to -17 °C). Thereafter, the beans were roasted, ground or extracted under the same conditions to give coffee extracts. For comparison, a control sample was prepared in the same manner as above, using raw coffee beans stored at room temperature. These coffee extracts were evaluated by a panel of 20 members in accordance with the same rating as in Example 2. The content of ingredients contained in the roasted coffee beans was determined as in Example 4. Results obtained are shown in Table 5.

Table 5

|  | Rated Points of Coffee Extract | Contents (%) | |
|---|---|---|---|
|  |  | Chlorogenic Acid | Caffeine |
| Control | 28 | 8.58 | 5.62 |
| Stored in refrigerator (comparative example) | 31 | 8.74 | 5.77 |
| Stored in freezer (present invention) | 50 | 9.73 | 5.74 |
| Stored in deep freezer (comparative example) | 20 | 9.05 | 5.94 |

EP 0 453 585 B1

**Claims**

1. Process for making coffee extract from raw coffee beans available in the market place by the steps of (1) roasting said beans; (2) grinding the roasted beans; and (3) exposing the ground beans to hot water to form a coffee extract solution, which consists of pretreating said raw coffee beans before said roasting step to thereby improve the flavor properties of said coffee extract wherein said pretreatment consists essentially of

(a) placing the raw coffee beans in a freezer maintained at temperature in a range from -4°C to no more than 3°C wherein the beans remain in an unfrozen condition while in said freezer;

(b) keeping said beans in said freezer in said temperataure range for at least 7 days and for not more than 21 days;

(c) removing said beans from said freezer; and

(d) starting the roasting of the beans within 24 hours after the removal from said freezer.

2. Process according to claim 1,
   wherein the temperature at step (a) is in a range from -4°C to 0°C.

3. Process according to claim 1, wherein said beans are charged into a bag and the bag is stored in said freezer.

4. Process of claim 3, wherein said bag is gas-permeable.

5. Process of claim 3, wherein said bag is a polyethylene bag or a jute bag.

6. Process of claim 3, wherein said bag is an aluminum bag.

**Patentansprüche**

1. Verfahren zur Herstellung von Kaffee-Extrakt aus am Markt erhältlichen Rohkaffeebohnen durch die Stufen

1) die Kaffeebohnen werden geröstet;

2) die gerösteten Bohnen werden gemahlen; und

3) die gemahlenen Bohnen werden heißem Wasser ausgesetzt unter Bildung einer Kaffee-Extraktlösung, wobei die Rohkaffeebohnen unter Verbesserung der Aromaeigenschaften des Kaffee-Extraktes vor der Röststufe vorbehandelt werden und die Vorbehandlung im wesentlichen besteht aus:

a) Einbringen der Rohkaffeebohnen in eine Gefriereinrichtung, die bei einer Temperatur im Bereich von -4°C bis nicht hoher als 3°C gehalten wird und worin die Bohnen in ungefrorenem Zustand verbleiben, während sie sich in der Gefriereinrichtung befinden;

b) Halten der Bohnen in der Gefriereinrichtung in dem angegebenen Temperaturbereich für wenigstens sieben Tage und nicht länger als 21 Tage;

c) Entfernen der Bohnen aus der Gefriereinrichtung; und

d) Beginnen mit dem Rösten der Bohnen innnerhalb von 24 Stunden nach dem Entfernen der Bohnen aus der Gefriereinrichtung.

2. Verfahren nach Anspruch 1, wobei die Temperatur in Stufe a) im Bereich von -4°C bis 0°C liegt.

3. Verfahren nach Anspruch 1, wobei die Bohnen in einen Sack eingebracht werden und der Sack in die Gefriereinrichtung gegeben wird.

4. Verfahren nach Anspruch 3, wobei der Sack gasdurchlässig ist.

5. Verfahren nach Anspruch 3, wobei der Sack ein Polyethylensack oder ein Jutesack ist.

6. Verfahren nach Anspruch 3, wobei der Sack ein Aluminiumsack ist.

7

EP 0 453 585 B1

**Revendications**

1. Procédé de fabrication d'un extrait de café à partir de grains purs de café disponibles sur le marché comprenant la phase (1) de torréfaction des grains de mouture des grains torréfiés (2) et le maintien du marc de café avec de l'eau chaude afin d'obtenir un extrait de café, ledit procédé consistant à pré-traiter les grains purs de café avant la phase de torréfaction pour améliorer les propriétés aromatiques dudit extrait de café, ledit pré-traitement consistant essentiellement :

   a) à placer les grains purs de café dans un appareil producteur de froid pour les maintenir à une température comprise entre -4°C et +3°C afin que les grains restent dans des conditions non congelés dans l'appareil producteur de froid;

   b) à maintenir les grains dans ledit appareil producteur de froid au moins sept jours et au plus vingt et un jours;

   c) à retirer les grains de l'appareil producteur de froid; et

   d) à commencer la torréfaction des grains dans un délai inférieur à 24 heures après qu'ils aient été retirés de l'appareil producteur de froid.

2. Procédé de fabrication d'un extrait de café, selon la revendication 1, caractérisé en ce que la température de la phase (a) est comprise entre -4°C et 0°C.

3. Procédé de fabrication d'un extrait de café, selon la revendication 1, caractérisé en ce que les grains sont logés dans un sac et le sac est disposé dans l'appareil producteur de froid.

4. Procédé de fabrication d'un extrait de café, selon la revendication 3, caractérisé en ce que le sac est perméable au gaz.

5. Procédé de fabrication d'un extrait de café, selon la revendication 3, caractérisé en ce que le sac est en polyéthylène ou en jute.

6. Procédé de fabrication d'un extrait de café, selon la revendication 3, caractérisé en ce que le sac est en aluminium.

8